# EUROPÄISCHE PATENTSCHRIFT

(11) **EP 2 103 340 B1**
(45) Veröffentlichungstag und Bekanntmachung des Hinweises auf die Patenterteilung: **17.06.2015**
(21) Anmeldenummer: 09001803.7
(22) Anmeldetag: 10.02.2009
(51) Int. Cl.: B64B 1/20, B01D 53/00

(54) **Vorrichtung zur Entfernung von Schadgasen aus der Atmosphäre**
Device for removing dangerous gases from the atmosphere
Dispositif d'enlèvement de gaz nocifs de l'atmosphère

(30) Priorität: 18.03.2008 DE 102008015080
(43) Veröffentlichungstag der Anmeldung: 23.09.2009
(73) Patentinhaber: Astrium GmbH, 85521 Ottobrunn (DE)
(72) Erfinder: Konigorski, Detlev, 27248 Ehrenburg (DE)
(74) Vertreter: Marschall, Stefan

(56) Entgegenhaltungen:
- WO-A-00/16097
- US-A- 5 147 429
- US-A- 5 912 396

## Beschreibung

Die Erfindung betrifft eine Vorrichtung zur Entfernung von Schadgasen aus der Atmosphäre in Form einer in der Erdatmosphäre autonom operierende Plattform in Leichtbauweise nach Art eines Luftschiffes , die mit Einlässen und Auslässen versehen ist, die Einheiten zur Gasextrahierung und -separation und zur Speicherung und Aufbereitung von flüssigen und gasförmigen Produkten aufweist und die Plattform Solarzellen bzw. einen thermoelektrischen Generator für die Energieerzeugung aufweist.

Die globale Erwärmung wird allgemein als das Resultat einer erhöhten Konzentration von Schadgasen, insbesondere von Treibhausgasen, in der Atmosphäre angesehen. Verglichen mit dem sich selbst regulierenden natürlichen Treibhauseffekt hat der anthropogene Treibhauseffekt, in dessen Folge sich die Konzentration von Treibhausgasen in der Atmosphäre um mehr als 150 Prozent während der letzten 100 Jahre erhöht hat, schwerwiegende Konsequenzen für die Atmosphäre einschließlich eines vermutlich auf diesen Treibhauseffekt zurückzuführenden Anstieg der weltweiten Durchschnittstemperatur. Die Reduktion von Emissionen ist jedoch schwer zu realisieren und stößt auf vielfältige Widerstände, da sie mit schwerwiegenden Änderungen des gewohnten Lebens- und auch Arbeitsstils einhergehen müßte.

Daher ist in der US - A - 51 47 429 eine Vorrichtung der eingangs genannten Art vorgeschlagen worden, bei der geeignete Einrichtungen zur Entfernung von Schadstoffen aus der Atmosphäre auf einer autonom operierenden Plattform in Form eines lenkbaren Luftschiffes angeordnet sind. Das Luftschiff ist bei dieser bekannten Vorrichtung mit herkömmlicher Propellern ausgestattet, die an Triebwerksgondeln angeordnet sind. In analoger weise wird auch in der WO 00/16097 A die Aufgabe, eine radioaktive Wolke aus der Atmosphäre zu entfernen, durch eine auf einem solchen lenkbaren Luftschiff angeordnete Einrichtung gelöst.

Eine Vielzahl derartiger Plattformen, die frei durch die Atmosphäre schweben, wären somit in der Lage, die Atmosphäre nachhaltig zu reinigen, indem sie einen signifikanten Anteil an Schadgasen aus der Atmosphäre extrahierten.

Ausgehend von der aus der US - A - 51 47 429 bekannten Anordnung liegt die Aufgabe zugrunde, eine derartige Vorrichtung so auszubilden, daß sie mit einem Energieerzeugungssystem ausgestattet ist, das bei seinem Betrieb selbst keinerlei Schadstoffausstoß verursacht.

Diese Aufgabe wird dadurch gelöst, daß die Solarzellen bzw. der thermoelektrische Generator mit einem geschlossenen kryogenen Kreislaufsystem kombiniert sind und daß die von diesem kryogenen System erzeugte Energie den Einheiten zur Gasextrahierung und - separation sowie zur Speicherung und Aufbereitung von flüssigen und gasförmigen Produkten zuführbar ist.

Jede Plattform gemäß der Erfindung ist somit mit einem Energieerzeugungssystem in Form einer Kombination von Solarzellen bzw. einem thermoelektrischen Generator und einem geschlossenen kryogenen Kreislaufsystem ausgestattet, das bei seinem Betrieb selbst keinerlei Schadstoffausstoß verursacht. Die von diesem kryogenen System erzeugte Energie dient sowohl der Extrahierung der Schadgase aus der Atmosphäre als auch, zu einem geringeren Anteil, zum Betrieb eines Kollisionsvermeidungssystems auf der Basis eines Plasmawellenantriebes bzw. von Ionenantriebstechnologie für den Fall, daß die erfindungsgemäße Vorrichtung Höhen mit viel Flugverkehr kreuzt.

Da die erfindungsgemäße Vorrichtung geeignet ist, in unterschiedlichen Temperaturbereichen zu arbeiten, können verschiedenen Schadgaskomponenten separat extrahiert und gespeichert werden und die so gespeicherten Gase können anschließend verarbeitet, rezykliert und danach wieder ausgestoßen werden.

Eine hohe Wirksamkeit der Vorrichtung gemäß der Erfindung ergibt sich beispielsweise durch die Tatsache, daß bereits ein Chlorgasatom in der Lage ist, etwa eine Million Ozonmoleküle zu zerstören. Auch wenn es mit einer einzelnen erfindungsgemäßen Vorrichtung nur möglich ist, einige wenige Chloratome aus der Atmosphäre zu extrahieren, so liegt die Anzahl der auf diese Weise geschützten Ozonmoleküle bereits bei einigen Millionen Molekülen. Damit kann beispielsweise durch eine gezielte Extrahierung von Chloratomen mit der Vorrichtung gemäß der Erfindung langfristig ein stabilisierender Effekt auf die Ozonschicht erreicht werden, wobei dies nur ein spezielles Szenario dessen darstellt, was mit der erfindungsgemäßen Vorrichtung realisiert werden kann, insbesondere dann, wenn sie in größerer Anzahl eingesetzt wird.

Das Konzept der Vorrichtung gemäß der Erfindung basiert dabei auf einer Kombination von für sich genommen bereits bekannten und ausgereiften Technologien, wodurch eine Produktion auch in großen Stückzahlen möglich ist. So ist die bei der erfindungsgemäßen Vorrichtung vorgesehene Leichtbau-Technologie unter anderem beispielsweise von zeppelinen, Luftschiffen, Ballonen usw. bekannt, mit denen Einsatzhöhe von einigen Metern bis hin zu 30 bis 40 Kilometern erreicht werden können.

Die bei der Vorrichtung gemäß der Erfindung vorgesehene Solarenergie-Technologie wurde bisher überwiegend dazu genutzt, um Luftfahrzeuge anzutreiben, die deutlich schwerer waren als beispielsweise Luftschiffe, Zeppeline oder Raumfahrzeuge. Eine Verwendung einer Kombination von Solarenergie-Technologie mit einem extrem leichten Luftfahrzeug ist daneben in einer aus der US 59 12 396 A bekannten autonomen Vorrichtung vorgesehen, mittels derer große Mengen elektrischer Ladungsträger in die das Luftfahrzeug umgebende Atmosphäre abgegeben werden können mit dem Zweck, diese zu reinigen.

Die bei der Erfindung zum Einsatz gelangende Gasextrahierungs-Technologie ist auf der Erde vornehmlich im industriellen Sektor zu finden, z.B. für die Luftverflüssigung. Andere diesbezügliche Ansätze bedienen sich verschiedener Filtersysteme, um bestimmte Gaskomponenten aus einem Gasgemisch zu extrahierten.

Die optional zur Solarenergie-Technologie vorgesehenen thermoelektrischen Generatoren nutzen spezielle Halbleitermaterialien, um wärmeenergie direkt in elektrische Energie umzuwandeln, wobei diese Technologie im Vergleich zu Solarzellen eine fast doppelt so hohe Energieeffizienz besitzt.

Plasmawellenantriebe und Ionenantriebstechnologie schließlich sind Technologien, die bisher ausschließlich bei wissenschaftlichen Labortests und Demonstratoren realisiert wurden.

Keine dieser Technologien wurde bisher in einer Kombination eingesetzt, wie sie die Vorrichtung gemäß der Erfindung vorsieht, um Gase aus der Atmosphäre zu extrahieren.

Nachfolgend soll die Erfindung anhand eines in der Zeichnung dargestellten Ausführungsbeispiels näher erläutert werden. Es zeigen
- Fig. 1: eine perspektivische Darstellung einer Plattform zur Entfernung von Schadgasen aus der Atmosphäre,
- Fig. 2: eine Draufsicht auf die Anordnung gemäß Fig. 1,
- Fig. 3: eine Vorderansicht der Anordnung gemäß Fig. 1
- Fig. 4: eine seitliche Ansicht der Anordnung gemäß Fig. 1
- Fig. 5: einen horizontalen Schnitt entlang der Linie V-V durch die Anordnung gemäß Fig.4 und
- Fig. 6: eine perspektivische Prinzipdarstellung eines Thermoelektrischen Generators.

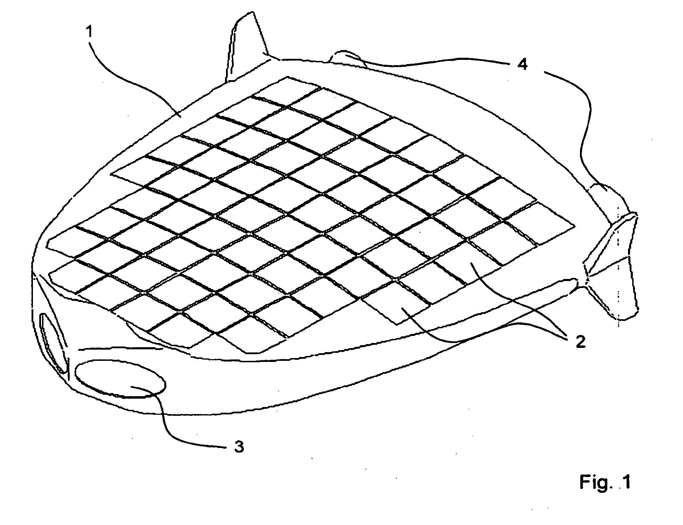

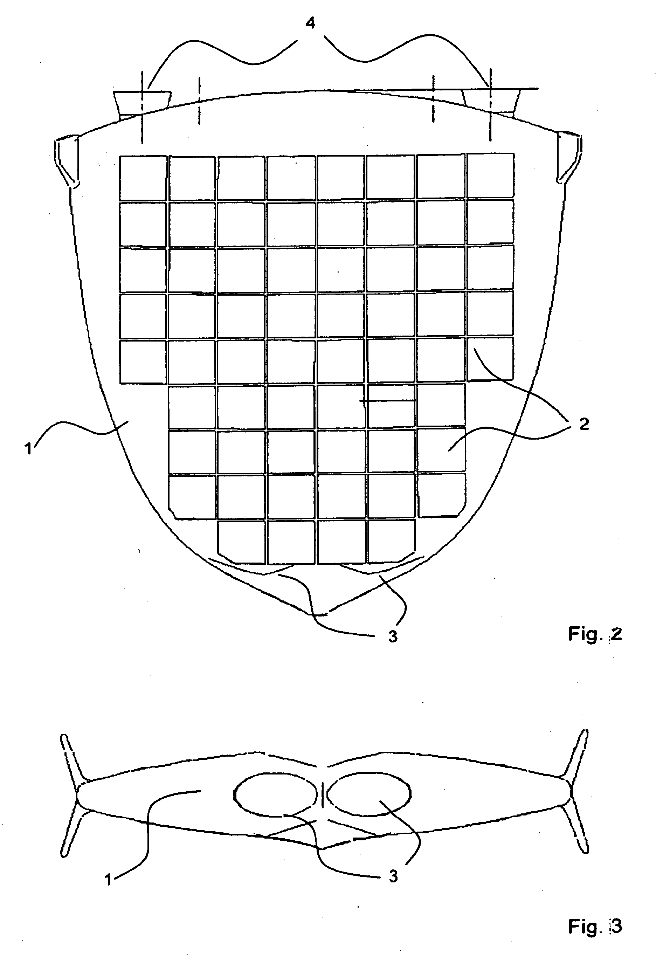

Die Abbildungen gemäß den Figuren 1 bis 4 zeigen verschiedene Ansichten einer Plattform zur Entfernung von Schadgasen aus der Atmosphäre. Die Zelle bzw. das Gehäuse 1 der Plattform ist in extremer Leichtbauweise erstellt, d.h., unter Verwendung metallener Leichtbauwerkstoffe, wie insbesondere Magnesium, und mit geringst möglichen Wandstärken. Die Oberfläche des Gehäuses 1 der Plattform ist mit einer Vielzahl von Solarzellen 2 besetzt. Darüber hinaus weist das Gehäuse 1 diverse Einlässe 3 auf, über die es mir der umgebenden Atmosphäre in Verbindung steht, sowie Auslässe 4 für mit Hilfe der Plattform erzeugte gasförmige Produkte.

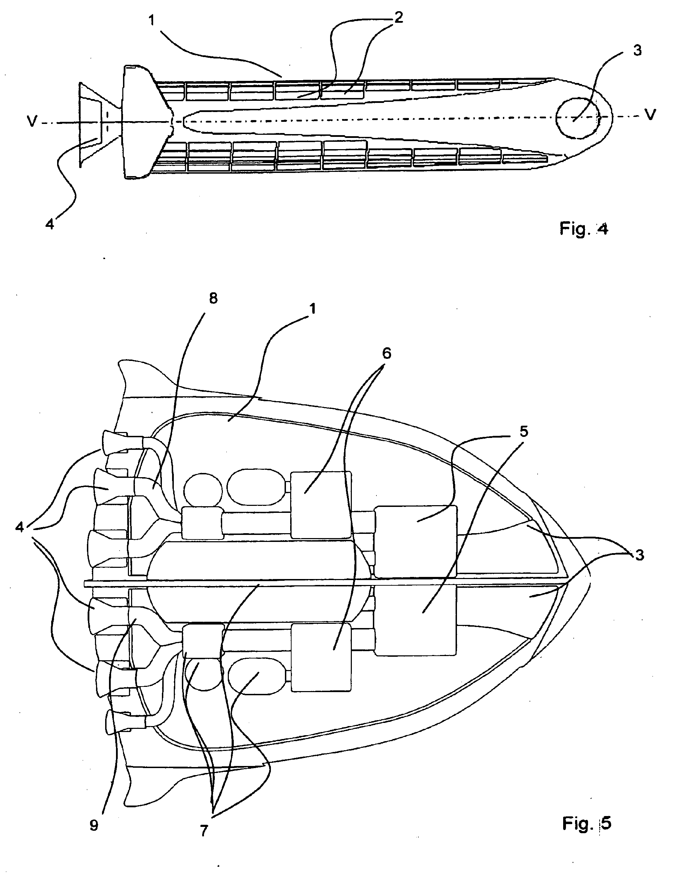

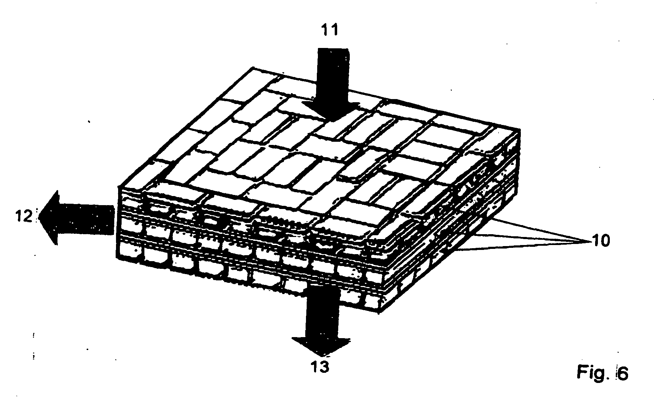

Fig. 5 zeigt in einer weitgehend schematischen Darstellung exemplarisch den technischen Aufbau der Plattform mit Kompressionseinheiten 5, Separations- bzw. Gasextrahierungseinheiten 6 zur Abtrennung von flüssigen Phasen aus dem zu reinigenden Gasgemisch, mit Speicherbehältern 7 für die diversen verflüssigten Gase, Bestrahlungseinheiten 8 für das Aufspalten von Gasmolekülen und Radikalen sowie mit den Auslässen 4 vorgeschalteten Ozongeneratoren 9. Die Energie zum Betrieb der einzelnen Einheiten 5 bis 9 wird dabei von den Solarzellen 2, oder alternativ dazu einem Thermoelektrischen Generator, in Kombination mit einem in der Zeichnung nicht dargestellten geschlossenen kryogenen Kreislaufsystem erzeugt. Das Prinzip eines solchen Thermoelektrischen Generators ist abschließend in Fig. 6 schematisch dargestellt. Dabei wird in einem schichtartig angeordnetem Halbleitermaterial 10 einfallende konzentrierte Sonnenstrahlung 11 in thermische Energie 12 umgewandelt, wobei die restliche Wärmeenergie 13 aus dem Thermoelektrischen Generator entweicht.

Wenn während des Betriebes der Plattform Gas aus der Atmosphäre extrahiert und gespeichert wird, nimmt das Gewicht der Plattform zu und diese sinkt in Richtung auf die Erdoberfläche. Sobald die Plattform in einer vorgegebenen Höhe angekommen ist, können einige der verflüssigten und gespeicherten Gaskomponenten, wie beispielsweise Wasser, abgelassen werden und gelangen dann unter anderem als Regen auf die Erde. Andere Komponenten werden an entsprechenden Bodenstationen entsorgt. Nach dem Entleeren der Tanks weist die Plattform wieder ein geringeres Gewicht auf und steigt erneut in ihre vorgesehen Arbeitshöhe auf, wo sie die Extrahierung von Gasen aus der Atmosphäre fortsetzt.

Das Starten und Landen der Plattform erfolgt nach demselben Prinzip wie bei einem zeppelin. Dazu befindet sich im Inneren der Vorrichtung ein Traggas, das für den erforderlichen Auftrieb sorgt. Durch in der Zeichnung nicht dargestellte Ballonets, d.h. aufblasbare Luftsäcke, kann dabei eine Volumenänderung des Traggases und somit ein Auf- oder Abstieg der Plattform erzeugt werden.

## Patentansprüche

1. Vorrichtung zur Entfernung von Schadgasen aus der Atmosphäre in Form einer in einem vorgebbaren Bereich der Erdatmosphäre frei schwebenden und autonom operierenden Plattform in Leichtbauweise, deren Gehäuse (1) mit Einlässen und Auslässen (4) versehen ist und in dem Einheiten zur Gasextrahierung und -separation (6) sowie zur Speicherung und Aufbereitung von flüssigen und gasförmigen Produkten (5, 7, 8, 9) enthalten sind, und wobei die Plattform Solarzellen (2) bzw. einen thermoelektrischen Generator für die Energieerzeugung aufweist, **dadurch gekennzeichnet, dass** die Solarzellen (2) bzw. der thermoelektrische Generator mit einem geschlossenen kryogenen Kreislaufsystem kombiniert sind, wobei die von diesem kryogenen System erzeugte Energie den Einheiten (5 - 9) zur Gasextrahierung und -separation sowie zur Speicherung und Aufbereitung von flüssigen und gasförmigen Produkten zuführbar ist.

## Claims

1. Device for removing harmful gases from the atmosphere in the form of an autonomously operating platform of lightweight construction, floating freely in a specifiable area of the Earth's atmosphere, of which the housing (1) is furnished with inlets and outlets (4) and accommodates units for gas extraction and separation (6) and for storing and processing liquid and gas-phase products (5, 7, 8, 9), and wherein the platform has solar cells (2) and/or a thermoelectric generator for generating energy, **characterised in that** the solar cells (2) and/or the thermoelectric generator are combined with a closed cryogenic circulation system, wherein the energy produced by said cryogenic system can be supplied to the units (5-9) for gas extraction and separation and for storing and processing liquid and gas-phase products.

## Revendications

1. Dispositif destiné à supprimer des polluants gazeux atmosphériques, ledit dispositif se présentant sous forme d'une plateforme d'un faible poids laquelle lévite librement au sein d'une zone de l'atmosphère terrestre pouvant être définie au préalable et laquelle fonctionne de manière autonome et laquelle comporte un boîtier (1) pourvu d'entrées et de sorties (4) et des unités permettant d'extraire et séparer des gaz (6) ainsi que de stocker et traiter des produits liquides et gazeux (5, 7, 8, 9), ladite plateforme comportant en outre des cellules solaires (2) ou un générateur thermoélectrique destiné(es) à produire de l'énergie, **caractérisé en ce que** les cellules solaires (2) ou le générateur thermoélectrique sont associé(es) à un système cryogénique à cycle fermé, l'énergie produite par ledit système cryogénique pouvant être utilisée pour alimenter les unités (5 - 9) permettant d'extraire et séparer des gaz ainsi que de stocker et traiter des produits liquides et gazeux.
